# EUROPEAN PATENT APPLICATION

(11) **EP 4 517 093 A1**
(43) Date of publication of application: **05.03.2025**
(21) Application number: 23796018.2
(22) Date of filing: 03.04.2023
(51) Int. Cl.: F04C 29/00, F04B 39/00, F25B 1/00

(54) **COMPRESSOR FOR REFRIGERATION CYCLE SYSTEM**

(30) Priority: 27.04.2022 JP 2022073062
(71) Applicant: Panasonic Intellectual Property Management Co., Ltd., Kadoma-shi, Osaka 571-0057 (JP)
(72) Inventor: HIWATA, Akira, Kadoma-shi, Osaka 571-0057 (JP)
(74) Representative: Eisenführ Speiser
(86) International application number: PCT/JP2023/013843
(87) International publication number: WO 2023/210271

(57) **Abstract**

A compressor (30) for a refrigeration cycle system (10) includes: a compression unit (40) that compresses a working medium containing an ethylenic fluoroolefin as a refrigerant and a refrigerating machine oil; an electric unit (50) that drives the compression unit, the electric unit including a stator (60) and a rotor (51) rotatable on an axis (C); a hermetic enclosure (31) housing the working medium, the compression unit, and the electric unit, the hermetic enclosure including a power supply terminal (36) electrically connectable to an external power source; and a lead wire (65) connected to the power supply terminal and the stator. The stator includes a core (61) and a coil (62) connected to the lead wire and wound on the core, and the lead wire has a higher dielectric strength than the coil.

## Description

### Technical Field

The present disclosure relates to a compressor for a refrigeration cycle system.

### Background Art

Conventionally, a heat cycle system of Patent Literature 1 is known as a refrigeration cycle system. This heat cycle system uses 1,1,2-trifluoroethylene (hereinafter also referred to as "HFO-1123") as a working medium for a heat cycle.

### Citation List

### Patent Literature

PTL 1: WO 2012-157764

### Summary of Invention

### Technical Problem

HFO-1123, which is used as a working medium in the heat cycle system of Patent Literature 1, contributes relatively little to the global warming but has lower stability than conventional working media such as R-410A. Upon receiving high energy under high-temperature and high-pressure conditions, HFO-1123 tends to undergo disproportionation including self-decomposition followed by polymerization. This disproportionation could result in conversion of HFO-1123 to another compound or heat release from HFO-1123.

The present disclosure has been made to solve the problem as described above, and an object of the present disclosure is to provide a compressor for a refrigeration cycle system, the compressor being adapted to inhibit disproportionation of a working medium containing an ethylenic fluoroolefin.

### Solution to Problem

A compressor for a refrigeration cycle system according to an aspect of the present disclosure includes: a compression unit that compresses a working medium containing an ethylenic fluoroolefin as a refrigerant and a refrigerating machine oil; an electric unit that drives the compression unit, the electric unit including a stator and a rotor rotatable on an axis; a hermetic enclosure housing the working medium, the compression unit, and the electric unit, the hermetic enclosure including a power supply terminal electrically connectable to an external power source; and a lead wire connected to the power supply terminal and the stator, wherein the stator includes a core and a coil connected to the lead wire and wound on the core, and the lead wire has a higher dielectric strength than the coil.

### Advantageous Effects of Invention

The present disclosure can provide a compressor for a refrigeration cycle system, the compressor being adapted to inhibit disproportionation of a working medium containing an ethylenic fluoroolefin.

### Brief Description of Drawings

FIG 1 schematically shows a refrigeration cycle system according to an embodiment or a variant of the present disclosure.
FIG 2 is a cross-sectional view showing a compressor including an electric unit employing concentrated winding.
FIG 3 is a perspective view showing a stator of FIG 2.
FIG 4 shows a power supply terminal of FIG 2.
FIG 5 is a cross-sectional view showing a compressor according to Variant 1 which includes an electric unit employing distributed winding.
FIG 6 is a cross-sectional view showing a part of a compressor according to Variant 4 which includes a capsule-shaped feeder and an electric unit employing concentrated winding.
FIG 7 is a cross-sectional view showing a part of a compressor according to Variant 4 which includes a tank-shaped feeder and an electric unit employing concentrated winding.
FIG 8 is a cross-sectional view showing a part of a compressor according to Variant 4 which includes a mold-shaped feeder and an electric unit employing concentrated winding.
FIG 9 is a cross-sectional view showing a part of a compressor according to Variant 4 which includes a capsule-shaped feeder and an electric unit employing distributed winding.
FIG 10 is a cross-sectional view showing a part of a compressor according to Variant 4 which includes a tank-shaped feeder and an electric unit employing distributed winding.
FIG 11 is a cross-sectional view showing a part of a compressor according to Variant 4 which includes a mold-shaped feeder and an electric unit employing distributed winding.
FIG 12A is a graph showing an example of the relationship between a refrigeration cycle working medium and the COP of an air conditioner, the refrigeration cycle working medium being composed of an exemplary refrigerant mixture of the present embodiment and a refrigerating machine oil.
FIG 12B is a graph showing the relationship between the compatibility with the refrigerating machine oil and the temperature for each of a fluoroolefin and propane of which the exemplary refrigerant mixture of FIG 12A is composed.

### Description of Embodiments

A compressor for a refrigeration cycle system according to a first aspect of the present disclosure includes: a compression unit that compresses a working medium containing an ethylenic fluoroolefin as a refrigerant and a refrigerating machine oil; an electric unit that drives the compression unit, the electric unit including a stator and a rotor rotatable on an axis; a hermetic enclosure housing the working medium, the compression unit, and the electric unit, the hermetic enclosure including a power supply terminal electrically connectable to an external power source; and a lead wire connected to the power supply terminal and the stator, wherein the stator includes a core and a coil connected to the lead wire and wound on the core, and the lead wire has a higher dielectric strength than the coil.

In this configuration, electric discharge of the lead wire can be prevented thanks to the high dielectric strength of the lead wire. Thus, even under high-temperature and high-pressure conditions, electric discharge-induced application of high energy to the working medium can be prevented to inhibit disproportionation arising from high energy application.

A compressor for a refrigeration cycle system according to a second aspect of the present disclosure is the compressor as defined in the first aspect, wherein the coil of the stator is wound by concentrated winding or distributed winding.

In this configuration, when the stator employs distributed winding, coil ends are large, so that a gap between the coil ends and the hermetic enclosure is narrow. Thus, the refrigerating machine oil retained on the bottom of the hermetic enclosure cannot easily flow upward through the gap and is likely to adhere to a lower one of the coil ends. For example, in the case where the temperature of a lower portion of the stator tends to increase, electric discharge of the coil at the lower coil end is prevented by the refrigerating machine oil which has high insulating performance; as a result, electric discharge-induced application of high energy to the working medium can be prevented to inhibit disproportionation arising from high energy application.

When the stator employs concentrated winding, coil ends are small, so that a gap between the coil ends and the hermetic enclosure is wide. Thus, the refrigerating machine oil retained on the bottom of the hermetic enclosure is likely to flow upward through the gap and adhere to an upper one of the coil ends. For example, in the case where the temperature of an upper portion of the stator tends to increase, electric discharge of the coil at the upper coil end is prevented by the refrigerating machine oil which has high insulating performance; as a result, electric discharge-induced application of high energy to the working medium can be prevented to inhibit disproportionation arising from high energy application.

A compressor for a refrigeration cycle system according to a third aspect of the present disclosure is the compressor as defined in the first or second aspect, wherein the rotor includes a protrusion on at least one of two ends of the rotor that are opposite to each other in a direction along the axis.

In this configuration, the rotation of the rotor causes the protrusion of the rotor to stir the refrigerating machine oil contained in the working medium, and the stirred refrigerating machine oil is likely to adhere to the coil of the stator. Thus, electric discharge of the coil is prevented by the refrigerating machine oil which has high insulating performance and, as a result, electric discharge-induced application of high energy to the working medium can be prevented to inhibit disproportionation arising from high energy application.

A compressor for a refrigeration cycle system according to a fourth aspect of the present disclosure is the compressor as defined in any one of the first to third aspects, wherein at least the stator or the rotor includes a path for the working medium, the path extending between two ends of the stator or the rotor that are opposite to each other in a direction along the axis.

In this configuration, the electric unit is cooled by the working medium moving through the path on the electric unit. Thus, high temperature-induced disproportionation can be inhibited.

A compressor for a refrigeration cycle system according to a fifth aspect of the present disclosure is the compressor as defined in any one of the first to fourth aspects, further including a feeder that holds a disproportionation inhibitor for inhibiting disproportionation of the ethylenic fluoroolefin and that releases the disproportionation inhibitor at a temperature equal to or higher than a specific temperature, wherein the coil includes a coil end projecting from an end of the core in a direction along the axis, and the feeder is located closer to the coil end than to the core.

In this configuration, although disproportionation becomes more likely to occur with increasing temperature of the working medium in the hermetic enclosure, the feeder reaches the specific temperature and releases the disproportionation inhibitor into the hermetic enclosure. Thus, the concentration of the disproportionation inhibitor increases at the coil end prone to electric discharge. As a result, disproportionation of the working medium can be inhibited or retarded by the disproportionation inhibitor even in a situation where the working medium is likely to undergo disproportionation arising from electric discharge-induced application of high energy.

A compressor for a refrigeration cycle system according to a sixth aspect of the present disclosure is the compressor as defined in any one of the first to fifth aspects, wherein the ethylenic fluoroolefin contained in the working medium can undergo disproportionation. In this configuration, an increase in the global warming potential (GWP) of the working medium can be effectively controlled, and the contribution of the working medium to the global warming can be reduced.

A compressor for a refrigeration cycle system according to a seventh aspect of the present disclosure is the compressor as defined in any one of the first to sixth aspects, wherein the ethylenic fluoroolefin is at least one selected from the group consisting of 1,1,2-trifluoroethylene, *trans-1,2-difluoroethylene,* cis-1,2-difluoroethylene, 1,1-difluoroethylene, tetrafluoroethylene, and monofluoroethylene. In this configuration, an increase in the global warming potential of the working medium can be effectively controlled.

A compressor for a refrigeration cycle system according to an eighth aspect of the present disclosure is the compressor as defined in any one of the first to seventh aspects, wherein the working medium further contains difluoromethane as a refrigerant. In this configuration, since the working medium contains difluoromethane, an increase in the global warming potential of the working medium can be effectively controlled.

A compressor for a refrigeration cycle system according to a ninth aspect of the present disclosure is the compressor as defined in any one of the first to eighth aspects, wherein the working medium further contains a saturated hydrocarbon with two to five carbon atoms. In this configuration, for example, disproportionation of the ethylenic fluoroolefin can be successfully inhibited or retarded by the saturated hydrocarbon.

A compressor for a refrigeration cycle system according to a tenth aspect of the present disclosure is the compressor as defined in the ninth aspect, wherein the saturated hydrocarbon includes n-propane. In this configuration, the n-propane acts both as a disproportionation inhibitor and a refrigerant and has a low global warming potential. Thus, disproportionation can be inhibited or retarded, and at the same time an increase in the global warming potential of the working medium can be effectively controlled.

A compressor for a refrigeration cycle system according to an eleventh aspect of the present disclosure is the compressor as defined in any one of the first to tenth aspects, wherein the working medium further contains a haloalkane with one or two carbon atoms as a disproportionation inhibitor for inhibiting disproportionation of the ethylenic fluoroolefin, and the haloalkane is other than a fluoroalkane containing only fluorine as a halogen substituent. In this configuration, disproportionation of the ethylenic fluoroolefin can be successfully inhibited or retarded by the disproportionation inhibitor.

A compressor for a refrigeration cycle system according to a twelfth aspect of the present disclosure is the compressor as defined in any one of the first to tenth aspects, wherein the working medium contains 1,1,2-trifluoroethylene and n-propane, and a proportion of the n-propane to a total amount of the 1,1,2-trifluoroethylene and the n-propane is 20% by mass or more. In this configuration, disproportionation can be further successfully inhibited or retarded even under high-temperature and high-pressure conditions.

A compressor for a refrigeration cycle system according to a thirteenth aspect of the present disclosure is the compressor as defined in any one of the first to twelfth aspects, wherein the working medium contains 1,1,2-trifluoroethylene and n-propane, and a proportion of the 1,1,2-trifluoroethylene is 80% and a proportion of the n-propane is 20% by mass based on 100% by mass of a total amount of the 1,1,2-trifluoroethylene and the n-propane. In this configuration, since the mass ratio of the 1,1,2-trifluoroethylene to the n-propane is 4:1, disproportionation can be further successfully inhibited or retarded even under high-temperature and high-pressure conditions.

Hereinafter, exemplary embodiments of the present invention will be described with reference to the drawings. The same or equivalent elements are denoted by the same reference signs throughout the drawings.

### (Embodiment 1)

### <Refrigeration cycle system>

A refrigeration cycle system 10 according to one embodiment of the present disclosure is used, for example, in an air conditioner, a refrigerator (for household use or business use), a dehumidifier, a showcase, an ice machine, a heat pump water heater, a heat pump washer-dryer, or a vending machine. The following will describe an example in which the refrigeration cycle system 10 is applied to an air conditioner.

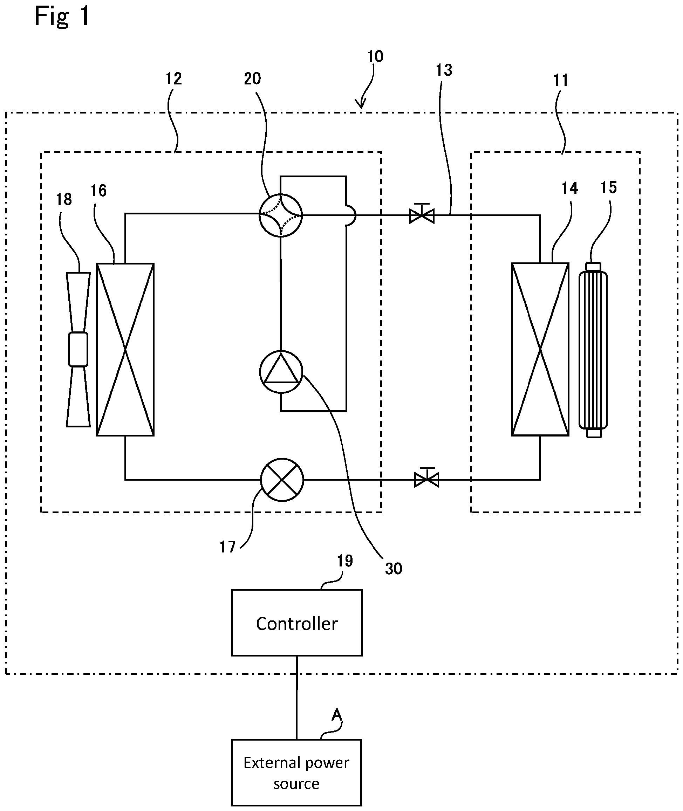

As shown in the example of FIG 1, the refrigeration cycle system 10 includes an indoor unit 11, an outdoor unit 12, and piping 13 connected to the indoor and outdoor units 11 and 12. The indoor unit 11 includes a first heat exchanger 14 and a first fan 15. The outdoor unit 12 includes a second heat exchanger 16, a compressor 30, a decompressor 17, a second fan 18, and a controller 19. The indoor unit 11 may further include a temperature sensor and an operation interface. The piping 13 may further include various valve devices and a strainer.

The piping 13 is connected to the first heat exchanger 14, the compressor 30, the second heat exchanger 16, and the decompressor 17 in this order. The piping 13, the first heat exchanger 14, the compressor 30, the second heat exchanger 16, and the decompressor 17 constitute a refrigeration cycle as a loop path through which a working medium flows. The piping 13 is provided, for example, with a four-way valve 20 located between the first heat exchanger 14 and the compressor 30 and between the second heat exchanger 16 and the compressor 30. The four-way valve 20 switches the direction in which the working medium flows through the piping 13, depending on which of cooling and heating operations the air conditioner performs.

The first fan 15 is, for example, a cross flow fan. The first fan 15 draws air into the indoor unit 11 and delivers the air toward the first heat exchanger 14. After the air undergoes heat exchange through the first heat exchanger 14, the first fan 15 blows the air out of the indoor unit 11. The second fan 18 is, for example, a propeller fan. The second fan 18 draws outdoor air into the outdoor unit 12 and delivers the air toward the second heat exchanger 16. Other components such as the first heat exchanger 14, the second heat exchanger 16, the compressor 30, the decompressor 17, the four-way valve 20, the temperature sensor, the operation interface, an air blower, an accumulator 21, other valve devices, and the strainer are not limited to having particular configurations and may have any suitable known configurations.

The controller 19 is connected to, and control the operations of, the first fan 15, the four-way valve 20, the compressor 30, and the second fan 18. The controller 19 includes a processing unit and a storage unit. The storage unit is a memory accessible by the processing unit and stores programs for the refrigeration cycle. The processing unit includes circuitry such as a processor and executes the programs retrieved from the storage unit. Thus, the air conditioner including the refrigeration cycle system 10 performs, for example, cooling and heating operations.

### <Operations of refrigeration cycle system>

In the cooling operation, the working medium in a gaseous state is compressed by the compressor 30 and then delivered to the second heat exchanger 16 through the four-way valve 20. The working medium in a gaseous state exchanges heat with outdoor air through the second heat exchanger 16 and is condensed and liquefied. The working medium in a liquid state is decompressed by the decompressor 17 and then delivered to the first heat exchanger 14. In the first heat exchanger 14, the working medium in a liquid state exchanges heat with air inside the indoor unit 11 and is evaporated and gasified. The working medium in a gaseous state returns to the compressor 30 through the four-way valve 20. Thus, air cooled by heat exchange through the first heat exchanger 14 is delivered from the indoor unit 11 into the indoor space by the first fan 15.

In the heating operation, the working medium in a gaseous state is compressed by the compressor 30 and then delivered to the first heat exchanger 14 through the four-way valve 20. The working medium in a gaseous state exchanges heat with air inside the indoor unit 11 through the first heat exchanger 14 and is condensed and liquefied. The working medium in a liquid state is decompressed by the decompressor 17 into a gas-liquid two phase medium and delivered to the second heat exchanger 16. In the second heat exchanger 16, the gas-liquid two-phase working medium exchanges heat with outdoor air and is evaporated and gasified. The working medium in a gaseous state returns to the compressor 30 through the four-way valve 20. Thus, air heated by heat exchange through the first heat exchanger 14 is delivered from the indoor unit 11 into the indoor space by the first fan 15.

### <Working medium>

The working medium contains an ethylenic fluoroolefin as a refrigerant and a refrigerating machine oil. For example, the working medium may contain an ethylenic fluoroolefin that can undergo disproportionation. The ethylenic fluoroolefin may include, for example, at least one selected from the group consisting of 1,1,2-trifluoroethylene (HFO-1123), *trans-1,2-difluoroethylene* (HFO-1132(E)), cis-1,2-difluoroethylene (HFO-1132(Z)), 1,1-difluoroethylene (HFO-1132a), tetrafluoroethylene (CF₂=CF₂, FO-1114), and monofluoroethylene (HFO-1141).

The working medium may contain a compound other than 1,1,2-trifluoroethylene as a refrigerant. Typical examples of the other refrigerant include, but are not limited to: hydrofluorocarbons (HFCs) such as difluoromethane, difluoroethane, trifluoroethane, tetrafluoroethane, pentafluoroethane, pentafluoropropane, hexafluoropropane, heptafluoropropane, pentafluorobutane, and heptafluorocyclopentane; hydrofluoroolefins (HFOs) such as monofluoropropene, trifluoropropene, tetrafluoropropene, pentafluoropropene, and hexafluorobutene; saturated hydrocarbons such as ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane; and carbon dioxide.

The working medium may contain a saturated hydrocarbon with two to five carbon atoms as a disproportionation inhibitor for inhibiting disproportionation of the ethylenic fluoroolefin. Examples of the saturated hydrocarbon include, but are not limited to, ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. Among these, n-propane is preferred as the disproportionation inhibitor.

When the working medium contains 1,1,2-trifluoroethylene and n-propane, the proportion of the n-propane to the total amount of the 1,1,2-trifluoroethylene and the n-propane (amount of n-propane/total amount of 1,1,2-trifluoroethylene and n-propane) is 20% by mass or more. The proportion of the n-propane to the 1,1,2-trifluoroethylene (amount of n-propane/amount of 1,1,2-trifluoroethylene) is 25% by mass or more. Furthermore, the proportion of the 1,1,2-trifluoroethylene is 80% and the proportion of the n-propane is 20% by mass based on 100% by mass of the total amount of the 1,1,2-trifluoroethylene and the n-propane.

The working medium may contain a haloalkane with one or two carbon atoms as a disproportionation inhibitor (the haloalkane is other than a fluoroalkane containing only fluorine as a halogen substituent). Examples of the haloalkane with one carbon atom, namely halomethane, include, but are not limited to, (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I).

Examples of the haloalkane with two carbon atoms, namely haloethane, include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). One of the above-mentioned haloalkanes may be used alone, or two or more thereof may be used in any suitable combination.

The refrigerating machine oil contains, for example, a hydrocarbon oil or an oxygen-containing oil as a base oil and may further contain an additive as necessary. The amount of the base oil in the refrigerating machine oil is 80% by mass or more, preferably 90% by mass or more or 95% by mass or more, based on the total amount of the refrigerating machine oil.

Examples of the hydrocarbon oil include mineral oils, olefin polymers, naphthalene compounds, and alkylbenzenes. Examples of the oxygen-containing oil include: ester oils such as monoesters, diesters, polyol esters, and complex esters; and ether oils such as polyalkylene glycols, polyvinyl ethers, polyphenyl ethers, and perfluoroethers. The oxygen-containing oil preferably contains at least one selected from a polyol ester, a polyalkylene glycol, and a polyvinyl ether as a main component and more preferably contains a polyol ester or a polyvinyl ether as a main component.

### <Compressor>

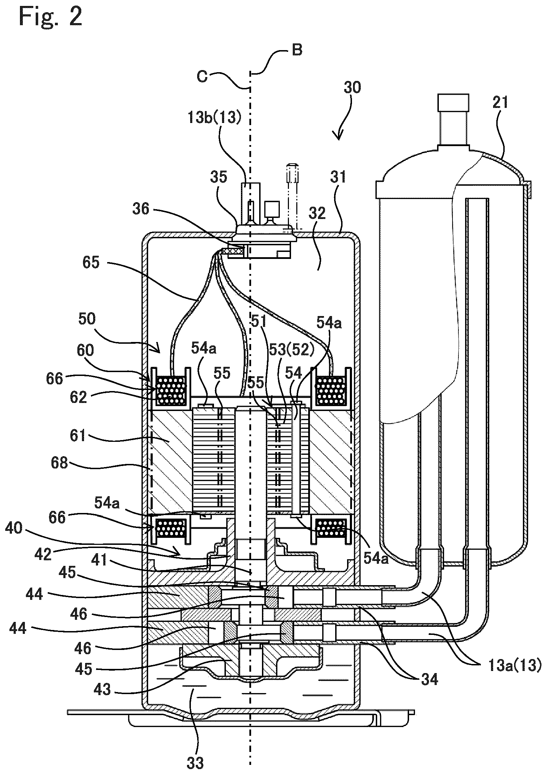

As shown in the example of FIG 2, the compressor 30 is, for example, a hermetic rotary compressor and includes a compression unit 40, an electric unit 50, and a hermetic enclosure 31. In the following description, a direction parallel to an axis B of a stator 60 of the electric unit 50 will be referred to as a vertical direction. A direction orthogonal to the vertical direction will be referred to as a radial direction. The compressor 30 is not limited to the illustrated configuration.

The hermetic enclosure 31 houses the working medium, the compression unit 40, and the electric unit 50. The hermetic enclosure 31 includes an oil-retaining region 33 located at the bottom of the hermetic enclosure 31 and retaining the refrigerating machine oil of the working medium. The hermetic enclosure 31 includes a suction inlet 34 and a discharge outlet 35. The piping 13 includes suction piping 13a connected to the suction inlet 34 and discharge piping 13b connected to the discharge outlet 35. The working medium is sucked from the suction piping 13a into the hermetic enclosure 31 through the suction inlet 34, compressed by the compression unit 40 in the hermetic enclosure 31, and discharged into the discharge piping 13b through the discharge outlet 35.

The compression unit 40 is a compression mechanism driven by the electric unit 50 to compress the working medium and includes a crankshaft 41, a main bearing 42, and an auxiliary bearing 43. The crankshaft 41 is connected to and rotated by the electric unit 50. The main bearing 42 and the auxiliary bearing 43 rotatably support the crankshaft 41.

The compression unit 40 includes a cylinder 44 and a rolling piston 45. The cylinder 44 includes a compression chamber 46 as an internal space. The compression chamber 46 communicates with the suction inlet 34 and communicates with an enclosure space 32 which is an internal space of the hermetic enclosure 31 through a discharge muffler. In the example of FIG 2, the compression unit 40 includes two upper and lower cylinders 44. Alternatively, the compression unit 40 may include one cylinder 44.

The rolling piston 45 is located in the compression chamber 46 and connected to the crankshaft 41. In response to rotation of the crankshaft 41, the rolling piston 45 rotates in contact with a vane in the compression chamber 46 to suck the working medium from the suction piping 13a into the compression chamber 46 through the suction inlet 34 and compress the sucked working medium. The compressed working medium is discharged from the discharge muffler into the enclosure space 32 and discharged from the enclosure space 32 into the discharge piping 13b through the discharge outlet 35.

The suction piping 13a is provided with an accumulator 21. The accumulator 21 performs gas-liquid separation of the working medium flowing through the suction piping 13a and allows the working medium in a gaseous state to flow into the compressor 30 without letting the working medium in a liquid state flow into the compressor 30. This can prevent liquid compression in the compression chamber 46 of the compressor 30.

Although in the present embodiment rotary compression is described as an example of the compression method used in the compression unit 40, the compression unit 40 is not limited to rotary compression. For example, the compression method used in the compression unit 40 may be positive displacement compression such as scroll or reciprocating compression or may be centrifugal compression.

### <Electric unit>

The electric unit 50 is, for example, located above the components such as the compression chamber 46 and the rolling piston 45 of the compression unit 40 in the hermetic enclosure 31 and farther from the oil-retaining region 33 retaining the refrigerating machine oil than the components such as the compression chamber 46 and the rolling piston 45 of the compression unit 40 in the vertical direction. The electric unit 50 is, for example, an electric motor such as a brushless DC motor and includes a stator 60 and a rotor 51. The rotor 51 is, for example, cylindrical in shape and includes a rotor core 52 to which a permanent magnet is integrally mounted. The rotor 51 is rotatably mounted inside the stator 60, with a narrow gap between the rotor 51 and the inner circumferential surface of the stator 60. The rotor 51 has an inner circumferential surface secured to the crankshaft 41 of the compression unit 40 and, for example, rotates together with the crankshaft 41 on an axis C extending in the vertical direction.

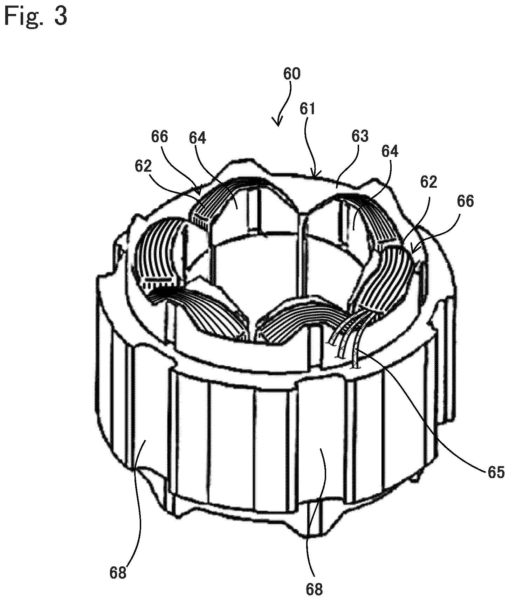

The stator 60 is secured to the hermetic enclosure 31 and, as shown in the example of FIG 3, includes a stator core 61 and a coil 62. The stator core 61 is formed of stacked magnetic steel sheets and includes a yoke 63 and a plurality of teeth 64. The yoke 63 is shaped, for example, as a cylinder having an axis B extending in the vertical direction. The teeth 64 are integral with the yoke 63, circumferentially arranged at intervals, and project radially from the inner circumferential surface of the yoke 63.

The coil 62 is an electrically-connected electric wire wound on the stator core 61 and generates a magnetic field upon receiving an electric current. The coil 62 is wound on each of the teeth 64 of the stator core 61 by concentrated winding. The coil 62 includes first coil ends 66 which are coil ends projecting from the ends of the stator core 61 in the vertical direction. The first coil ends 66 include an upper first coil end 66 projecting upward from the upper surface of the stator core 61 and a lower first coil end 66 projecting downward from the lower surface of the stator core 61. The coil 62 is connected to a lead wire 65.

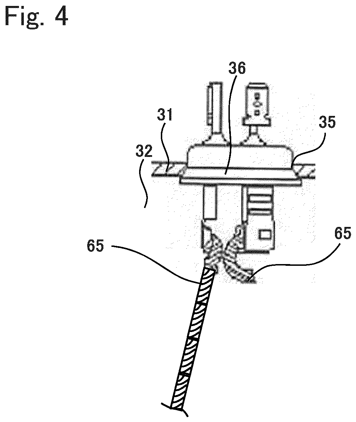

The lead wire 65 is a portion of the electric wire that is drawn from the coil 62. As shown in the example of FIGS. 2 and 4, the lead wire 65 is connected to a power supply terminal 36. The power supply terminal 36 is mounted on the hermetic enclosure 31 and connected to the controller 19 (FIG 1). The controller 19 receives electric power from an external power source A (FIG 1) and uses a switching device to apply an electric current to the coil 62 through the lead wire 65. Thus, a magnetic flux is generated in the stator 60, and the rotor 51 rotates. The controller 19 includes, for example, an inverter circuit. In this case, the controller 19 can change the rotational speed of the rotor 51 and allows the electric unit 50 to operate at varying speeds.

The coil 62 includes a conducting wire and a first insulator (first insulating film) covering the conducting wire. The lead wire 65 includes a conducting wire and a second insulator (second insulating film) covering the conducting wire. Each of the conducting wires is a path through which electric currents flow and is made of a conductive material such as copper. Each of the first and second insulators is made of an insulating material such as a resin and is, for example, a single layer of enamel resin or formed of a plurality of layers including a layer of enamel resin and a layer of another resin. Examples of the other resin include polyethylene terephthalate (PET), polyethylene naphthalate (PEN), aramid polymer, and polyphenylene sulfide (PPS).

The lead wire 65 has a higher dielectric strength than the coil 62. For example, the second insulator is thicker than the first insulator. The large thickness of the second insulator can prevent electric discharge of the lead wire 65. The small thickness of the first insulator makes it possible to increase the number of turns of the coil 62 on the stator core 61 while avoiding a size increase of the electric unit 50, thus leading to an increase in the operation efficiency of the electric unit 50.

The dielectric strength of the lead wire 65 need not be adjusted depending on the thickness of the second insulator. The dielectric strength of the lead wire 65 may be adjusted depending on factors such as the material and the configuration of the second insulator so as to be higher than the dielectric strength of the coil 62. For example, the second insulator of the lead wire 65 may be made with a material having a higher dielectric strength than the material of the first insulator of the coil 62.

Furthermore, the second insulator of the lead wire 65 may be a stack of a plurality of layers, which may include an inner insulator (inner insulating film) and at least one outer insulator (outer insulating film). The inner insulator is identical to the first insulator of the coil 62, and the outer insulator covers the inner insulator. In such a case where the second insulator of the lead wire 65 includes the inner insulator and the outer insulator, the lead wire 65 has a higher dielectric strength than the coil 62. In this case, the dielectric strength of the lead wire 65 can easily be adjusted to a desired level merely by covering the inner insulator with the outer insulator. The outer insulator may be formed simultaneously with the inner insulator or may be attached to the inner insulator after formation of the inner insulator.

### <Workings and benefits>

In the compressor 30 for the refrigeration cycle system 10, the lead wire 65 has a higher dielectric strength than the coil 62 and is thus resistant to electric discharge. Hence, even when the interior of the hermetic enclosure 31 has a high temperature and a high pressure, electric discharge of the lead wire 65 and therefore the lead wire 65's electric discharge-induced application of high energy to the working medium are prevented, with the result that disproportionation of the working medium can be inhibited.

In the compressor 30 for the refrigeration cycle system 10, the electric unit 50 is often operated at a low speed when, for example, the refrigeration cycle system 10 is used in a refrigerating machine. During the low-speed operation, the amount of the circulating working medium is small and accordingly the cooling effect of the working medium on the electric unit 50 is also small, so that the temperature of the electric unit 50 tends to increase. In this case, due to thermal convection, the upper first coil end 66 is more prone to an increase in temperature than the lower first coil end 66; thus, the working medium is more likely to become hot and undergo disproportionation at the upper first coil end 66 than at the lower first coil end 66. In the stator 60 employing concentrated winding, the first coil ends 66 are small enough so that there is a wide gap between the hermetic enclosure 31 and the first coil ends 66 in the radial direction, and the refrigerating machine oil is likely to flow upward through the gap and adhere to the upper first coil end 66. The refrigerating machine oil has high insulating performance and thus prevents electric discharge of the coil 62 at the upper first coil end 66. As a result, the coil 62's electric discharge-induced application of high energy to the working medium can be prevented to inhibit disproportionation of the working medium.

In the compressor 30 for the refrigeration cycle system 10, for example, electric discharge of the coil 62 is more likely to occur at the first coil ends 66 than in the rest of the coil 62, and electric discharge-induced application of high energy to the working medium is likely to cause disproportionation of the working medium. However, since the refrigerating machine oil adheres to and cools the first coil ends 66, disproportionation of the working medium can be inhibited. In the case where the working medium contains a disproportionation inhibitor such as a saturated hydrocarbon, the disproportionation inhibitor dissolves in the refrigerating machine oil and is fed to the first coil ends 66. Thus, once the temperature of the refrigerating machine oil increases through contact with the first coil ends 66 and the disproportionation inhibitor is released from the refrigerating machine oil, disproportionation of the working medium can be inhibited or retarded by the released disproportionation inhibitor.

### <Variant 1>

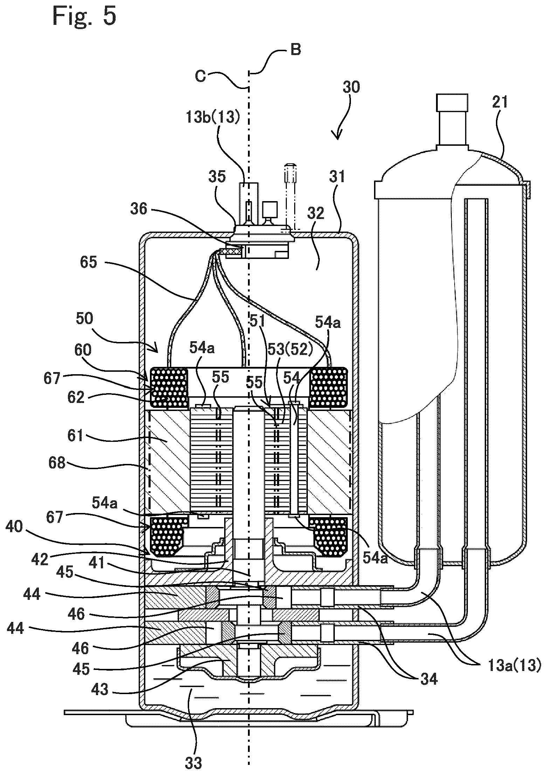

In the compressor 30 for the refrigeration cycle system 10 according to Variant 1, the coil 62 of the stator 60 is wound by distributed winding. For example, as shown in the example of FIG 5, the coil 62 is wound on the teeth 64 of the stator core 61 by distributed winding. The coil 62 includes second coil ends 67 which are coil ends projecting from the ends of the stator core 61 in the vertical direction. The second coil ends 67 include an upper second coil end 67 projecting upward from the upper surface of the stator core 61 and a lower second coil end 67 projecting downward from the lower surface of the stator core 61.

The second coil ends 67 in the distributed winding have a larger size than the first coil ends 66 in the concentrated winding. Thus, the gap present between the hermetic enclosure 31 and the second coil ends 67 in the radial direction is narrower than the gap present between the hermetic enclosure 31 and the first coil ends 66 in the radial direction. Thus, the refrigerating machine oil cannot easily flow upward through the gap and is likely to adhere to the lower second coil end 67.

In the compressor 30 for the refrigeration cycle system 10, the electric unit 50 is often operated at a high speed when, for example, the refrigeration cycle system 10 is used in a water heater or a heating machine. The operation of the electric unit 50 at a high speed brings the compression unit 40 into operation at a high compression ratio. In the operation at a high compression ratio, the temperature of the compression unit 40 increases. The lower second coil end 67 is closer to the compression unit 40 than the upper second coil end 67 and more readily heated by heat associated with the operation of the compression unit 40 than the upper second coil end 67; thus, disproportionation of the working medium is more likely to occur at the lower second coil end 67 than at the upper second coil end 67.

In the stator 60 employing distributed winding, as stated above, the refrigerating machine oil is likely to adhere to the lower second coil end 67. The refrigerating machine oil having high insulating performance prevents electric discharge of the coil 62 at the lower second coil end 67, and this can inhibit disproportionation of the working medium. Additionally, the refrigerating machine oil cools the second coil end 67, and this cooling contributes to inhibition of disproportionation of the working medium. Furthermore, once the disproportionation inhibitor dissolved in the refrigerating machine oil is heated by the lower second coil end 67 and released from the refrigerating machine oil, disproportionation of the working medium can be inhibited or retarded by the released disproportionation inhibitor.

### <Variant 2>

The compressor 30 for the refrigeration cycle system 10 according to Variant 2 is the compressor 30 as defined in the above embodiment or Variant 1, wherein the rotor 51 includes a protrusion 54a on at least one of the two ends of the rotor 51 that are opposite to each other in the direction along the axis C.

Specifically, as shown in the example of FIG 2 or 5, the rotor 51 includes a rotor core 52 cylindrical in shape. The rotor core 52 is formed of a plurality of thin, annular magnetic steel sheets 53 stacked in the vertical direction. Each of the magnetic steel sheets 53 is provided with a plurality of circular holes. Caulking pins 54 cylindrical in shape are inserted into the circular holes, and the stacked magnetic steel sheets 53 are secured together by the caulking pins 54. The caulking pins 54 have upper ends projecting upward from the upper surface of the rotor core 52 and lower ends projecting downward from the lower surface of the rotor core 52, thus forming protrusions 54a projecting from the upper and lower ends of the rotor 51 in the vertical direction. The protrusions 54a need not be present at the bottom of the rotor 51 and may be present only at the top of the rotor 51. The protrusions 54a need not be present at the top of the rotor 51 and may be present only at the bottom of the rotor 51.

As the rotor 51 rotates on the axis C of the rotor 51 which extends in the vertical direction, the protrusions 54a circle around the axis C of the rotor 51 to stir the refrigerating machine oil. Being stirred, the refrigerating machine oil flows radially outward away from the axis C of the rotor 51 under the effect of centrifugal force and adheres to the first coil ends 66 or the second coil ends 67 located radially outside the rotor 51. The refrigerating machine oil prevents electric discharge of the coil 62 at the first coil ends 66 or the second coil ends 67 and therefore prevents electric discharge-induced application of high energy to the working medium, with the result that disproportionation of the working medium can be inhibited or retarded.

The protrusions 54a are not limited to the ends of the caulking pins 54 and may be any kind of protrusions that project from at least one of the upper and lower ends of the rotor 51 in the vertical direction. For example, in the case where the crankshaft 41 is provided with a weight located at least above or below the rotor 51, the weight projects from the rotor 51 in the vertical direction. In this case, the weight serves as a protrusion 54a. In conjunction with the crankshaft 41 rotated by the electric unit 50, the weight circles around the axis of the crankshaft 41 which extends in the vertical direction, thus stirring the refrigerating machine oil. This stirring causes the refrigerating machine oil to adhere to the first coil end 66 or the second coil end 67, with the result that disproportionation of the working medium can be inhibited.

### <Variant 3>

The compressor 30 for the refrigeration cycle system 10 according to Variant 3 is the compressor 30 as defined in the above embodiment or Variant 1 or 2, wherein at least the stator 60 or the rotor 51 includes a path for the working medium, the path extending between the two ends of the stator 60 or the rotor 51 that are opposite to each other in the direction along the axis of the stator 60 or the rotor 51.

Specifically, in the electric unit 50 shown in the example of FIG 2, 3, or 5, there are a plurality of recesses 68 on the outer circumferential surface of the yoke 63 of the stator 60. Each of the recesses 68 serves as a path for the working medium. The recesses 68 are recessed inward from the outer circumferential surface of the yoke 63 and define a gap between the outer circumferential surface of the yoke 63 and the inner circumferential surface of the hermetic enclosure 31 toward which the outer circumferential surface of the yoke 63 faces. Each of the recesses 68 extends in the vertical direction and opens at the upper and lower surfaces of the yoke 63.

The rotor 51 is provided with a through hole 55 extending through the entire length of the rotor core 52 in the vertical direction. The through hole 55 serves as a path for the working medium. The through hole 55 extends in the vertical direction and opens at the upper and lower surfaces of the rotor core 52. The electric unit 50 may have the through hole 55 without being provided with the recesses 68 or may have the recesses 68 without being provided with the through hole 55.

Once the compression unit 40 is driven by the electric unit 50 as described above, the working medium is compressed by the compression unit 40 and discharged into the enclosure space 32. The working medium containing a mist of the refrigerating machine oil passes through the recesses 68 and the through hole 55. Thus, the refrigerating machine oil cools the electric unit 50, and this cooling can lead to prevention of high temperature-induced decline in the operation efficiency of the electric unit 50 and inhibition of high temperature-induced disproportionation of the working medium.

### <Variant 4>

The compressor 30 for the refrigeration cycle system 10 according to Variant 4 is the compressor 30 as defined in the above embodiment or any one of Variants 1 to 3, further including a feeder 70 that holds a disproportionation inhibitor for inhibiting disproportionation of an ethylenic fluoroolefin and that releases the disproportionation inhibitor at a temperature equal to or higher than a specific temperature. The coil 62 includes a coil end projecting from an end of the stator core 61 in the direction along the axis of the stator core 61. The feeder 70 is located closer to the coil end than to the stator core 61.

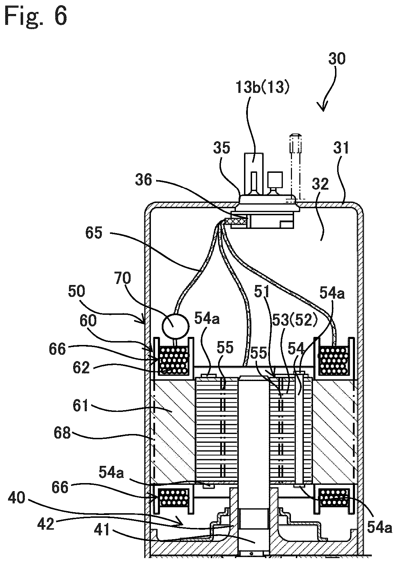

Specifically, in the example of FIG 6, the electric unit 50 employs concentrated winding, and the feeder 70 is located closer to the upper first coil end 66 than to the stator core 61 in the vertical direction. For example, the feeder 70 is attached to the lead wire 65 at a location above the first coil end 66 in the hermetic enclosure 31. The feeder 70 is shaped as a capsule and includes a container made of an insulating resin and holding a disproportionation inhibitor such as a saturated hydrocarbon or a haloalkane. Once the feeder 70 reaches a specific temperature, the resin container melts to release the disproportionation inhibitor.

The specific temperature is predetermined based on the performance of the electric unit 50 and the thermal class of the insulating material used in the electric unit 50. For example, the specific temperature is 60°C or higher in light of the performance of the electric unit 50. In addition, the specific temperature is lower than the maximum allowable temperature of the thermal class; for example, the specific temperature is 5°C or more below the maximum allowable temperature of the thermal class. For example, according to JIS C 4003, the maximum allowable temperature of class E is 120°C; thus, when the insulating material is a class E material, the specific temperature is 115°C or lower. In this case, the resin container of the feeder 70 melts at a temperature of 60 to 115°C to release the disproportionation inhibitor into the enclosure space 32 of the hermetic enclosure 31.

The amount of the disproportionation inhibitor held in the feeder 70 is predetermined, for example, based on the desired concentration of the disproportionation inhibitor in the enclosure space 32. For example, when the working medium contains 1,1,2-trifluoroethylene and n-propane, the amount of n-propane held as the disproportionation inhibitor in the feeder 70 is predetermined such that the proportion of n-propane to the total amount of 1,1,2-trifluoroethylene and n-propane in the enclosure space 32 is 20% by mass or more after n-propane as the disproportionation inhibitor is released into the enclosure space 32.

When the working medium contains 1,1,2-trifluoroethylene and a haloalkane as a disproportionation inhibitor, the same disproportionation inhibitor is released from the feeder 70 into the enclosure space 32. The amount of the disproportionation inhibitor held in the feeder 70 is predetermined such that in the enclosure space 32 the proportion of the disproportionation inhibitor is from 0.1 to 10% by mass based on 100% by mass of the total amount of the ethylenic fluoroolefin and the disproportionation inhibitor.

In the compressor 30 including the feeder 70 as described above, once the temperature of the feeder 70 reaches the specific temperature during the operation of the electric unit 50, the resin container of the feeder 70 melts and the disproportionation inhibitor held in the resin container is released into the enclosure space 32. Since the feeder 70 is located in proximity to the upper first coil end 66, the concentration of the disproportionation inhibitor increases at the first coil end 66. Even in the event that the working medium has a high temperature and a high pressure and high energy is applied to the working medium due to electric discharge at the first coil end 66, disproportionation of the working medium can be inhibited or retarded by the disproportionation inhibitor present at a high concentration.

The compressor 30 may include a plurality of feeders 70 including a feeder 70 located closer to the upper first coil end 66 than to the stator core 61 and a feeder 70 located closer to the lower first coil end 66 than to the stator core 61. For example, in some cases, the temperature of the lower first coil end 66 increases after the feeder 70 located in proximity to the upper first coil end 66 reaches the specific temperature. In such a case, once the feeder 70 located in proximity to the lower first coil end 66 reaches the specific temperature, the feeder 70 releases the disproportionation inhibitor. Thus, even in the event that high energy is applied to the working medium due to electric discharge at the lower first coil end 66, disproportionation of the working medium can be inhibited or retarded by the disproportionation inhibitor present at a high concentration.

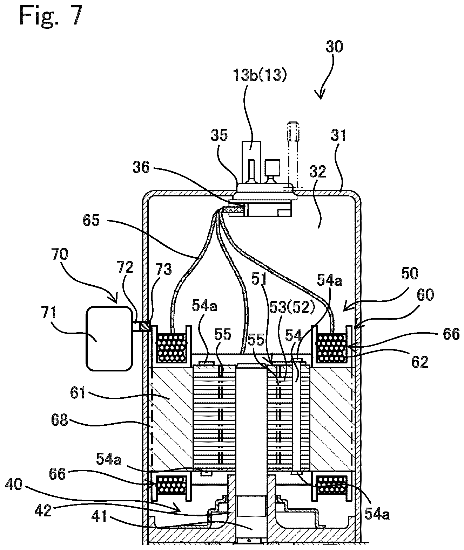

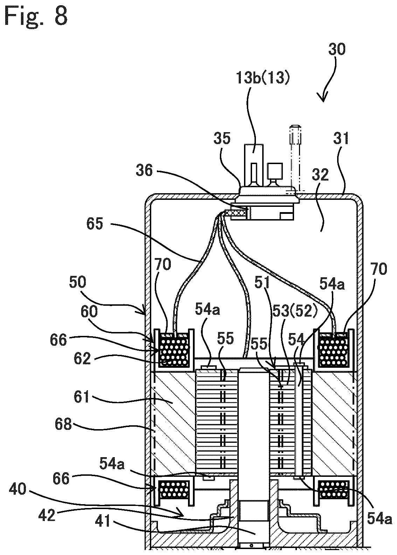

The feeder 70 is not limited to being shaped as a capsule and may have any shape as long as the feeder 70 holds a disproportionation inhibitor and releases the disproportionation inhibitor at a temperature equal to or higher than a specific temperature. For example, the feeder 70 may be shaped as a tank as shown in the example of FIG 7 or may be shaped as a mold as shown in the example of FIG 8.

In the example of FIG 7, the feeder 70 includes a tank 71, a connection portion 72, and a cap 73. The tank 71 retains a disproportionation inhibitor and is located outside the hermetic enclosure 31. The connection portion 72 penetrates into the hermetic enclosure 31 to connect the internal space of the tank 71 to the enclosure space 32 of the hermetic enclosure 31. The opening of the hermetic enclosure 31 that receives the connection portion 72 is located closer to the upper first coil end 66 than to the stator core 61; for example, the opening is located above the upper first coil end 66. The cap 73 is made of an insulating resin that melts at a temperature equal to or higher than a specific temperature and closes the connection portion 72. In the feeder 70 as described above, once the temperature of the cap 73 increases to the specific temperature due to the operation of the electric unit 50, the cap 73 melts and the disproportionation inhibitor retained in the tank 71 is released into the enclosure space 32 through the connection portion 72. Disproportionation of the working medium can be inhibited or retarded by the disproportionation inhibitor present at a high concentration.

In the example of FIG 8, the feeder 70 includes an insulating resin sealing the upper first coil end 66, and this resin contains a disproportionation inhibitor and melts at a temperature equal to or higher than a specific temperature. The feeder 70 is located closer to the upper first coil end 66 than to the stator core 61 in the vertical direction; for example, the feeder 70 is located above the upper first coil end 66. Once the temperature of the feeder 70 as described above increases to the specific temperature due to the operation of the electric unit 50, the resin of the feeder 70 melts. Thus, the disproportionation inhibitor contained in the resin is released into the enclosure space 32, and disproportionation of the working medium can be inhibited or retarded by the disproportionation inhibitor present at a high concentration.

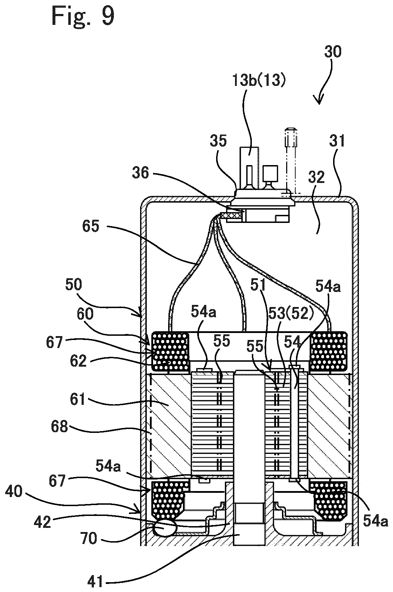

In the example of FIG 9, the electric unit 50 employs distributed winding, and the feeder 70 is located closer to the lower second coil end 67 than to the stator core 61 in the vertical direction; for example, the feeder 70 is located below the second coil end 67 in the hermetic enclosure 31 and lies on the bottom of the hermetic enclosure 31. The feeder 70 is shaped as a capsule and similar to the capsule-shaped feeder 70 of FIG 6. Thus, once the temperature of the feeder 70 increases to a specific temperature, the resin of the feeder 70 melts and the disproportionation inhibitor held in the feeder 70 is released into the enclosure space 32. Thus, disproportionation of the working medium can be inhibited or retarded by the disproportionation inhibitor present at a high concentration.

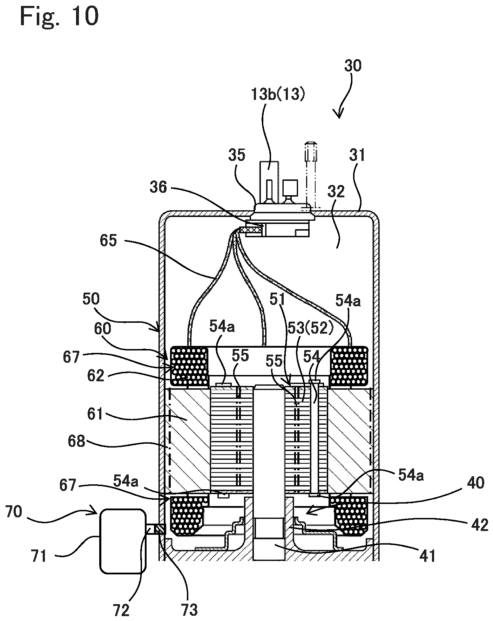

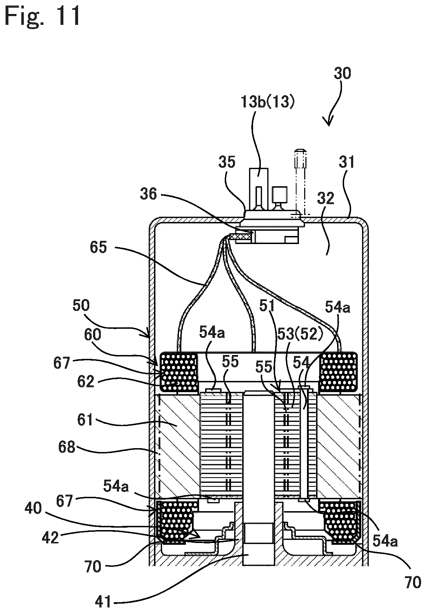

The compressor 30 may include a plurality of feeders 70 including a feeder 70 located closer to the upper second coil end 67 than to the stator core 61 and a feeder 70 located closer to the lower second coil end 67 than to the stator core 61. The feeder 70 is not limited to being shaped as a capsule and may have any shape as long as the feeder 70 holds a disproportionation inhibitor and releases the disproportionation inhibitor at a temperature equal to or higher than a specific temperature. For example, the feeder 70 may be shaped as a tank as shown in the example of FIG 10 or may be shaped as a mold as shown in the example of FIG 11.

In the example of FIG 10, the feeder 70 includes a tank 71, a connection portion 72, and a cap 73 as in the example of FIG 7. The opening of the hermetic enclosure 31 that receives the connection portion 72 is located closer to the lower second coil end 67 than to the stator core 61; for example, the opening is located below the lower second coil end 67. In the feeder 70 as described above, once the temperature of the cap 73 increases to a specific temperature due to the operation of the electric unit 50, the cap 73 melts and the disproportionation inhibitor retained in the tank 71 is released into the enclosure space 32 through the connection portion 72. Thus, disproportionation of the working medium can be inhibited or retarded by the disproportionation inhibitor present at a high concentration.

In the example of FIG 11, the feeder 70 includes an insulating resin sealing the lower second coil end 67, and this resin contains a disproportionation inhibitor and melts at a temperature equal to or higher than a specific temperature. The feeder 70 is located closer to the lower second coil end 67 than to the stator core 61 in the vertical direction; for example, the feeder 70 is located below the lower second coil end 67. Once the temperature of the feeder 70 as described above increases to the specific temperature due to the operation of the electric unit 50, the resin of the feeder 70 melts and the disproportionation inhibitor contained in the resin is released into the enclosure space 32. Thus, disproportionation of the working medium can be inhibited or retarded by the disproportionation inhibitor present at a high concentration.

### (Embodiment 2)

A refrigeration cycle system according to the present disclosure includes a refrigeration cycle including a hermetic compressor in which a refrigerating machine oil is retained. The refrigeration cycle system uses a refrigerant mixture as a refrigerant, and the refrigerant mixture contains a fluoroolefin and propane. A refrigeration cycle working medium composed of at least the refrigerating machine oil and the refrigerant mixture exhibits a refrigerant dissolved viscosity of 2 to 4 mm²/s under a working condition at a temperature of 28 to 60°C and an absolute pressure of 2.2 to 4.3 MPa.

In the above configuration, where the refrigerant dissolved viscosity of the refrigeration cycle working medium is in the range specified above, the propane contained in the refrigerant mixture easily dissolves in the refrigerating machine oil. Thus, when the hermetic compressor is not in operation, the amount of the fluoroolefin contained in the refrigerant mixture present in the hermetic compressor is apparently large, while when the hermetic compressor is in operation, the propane dissolved in the refrigerating machine oil is liberated from the refrigerating machine oil as the temperature increases.

Thus, the propane, which is more combustible than the fluororesin, easily dissolves in the refrigerating machine oil when the hermetic compressor is not in operation. This means that the apparent amount of the propane in the refrigerant mixture decreases. Hence, even in the event of leakage of the refrigerant mixture, the risk of burning of the leaking refrigerant mixture can be successfully reduced. When the hermetic compressor is in operation, the propane is liberated from the refrigerating machine oil, and the apparent amount of the propane in the refrigerant mixture increases. Thus, disproportionation of the fluoroolefin can be successfully inhibited by the propane which has a disproportionation-inhibiting action on the fluoroolefin.

Additionally, when the refrigerant dissolved viscosity of the refrigeration cycle working medium is in the range specified above, the refrigeration cycle can achieve both reduced energy consumption and satisfactory refrigeration capacity. As a result, the refrigeration cycle system using the refrigeration cycle working medium containing the fluoroolefin can achieve a satisfactory COP and successfully inhibit disproportionation of the fluoroolefin.

In the refrigeration cycle system configured as described above, the refrigeration cycle working medium may exhibit a refrigerant dissolved viscosity of 2 to 4 mm²/s under a working condition at a temperature of 115°C or lower and an absolute pressure of 1.7 to 4.6 MPa.

In the refrigeration cycle system configured as described above, the temperature in the working condition may range from 55 to 115°C.

In the refrigeration cycle system configured as described above, the compatibility of the refrigerant mixture with the refrigerating machine oil may be adjusted such that the proportion of the propane to the total mass of the fluoroolefin and the propane in the hermetic compressor is 20% by mass or more in case that the temperature in the working condition is higher than 115°C.

In the refrigeration cycle system configured as described above, the compatibility of the refrigerant mixture with the refrigerating machine oil may be adjusted such that the proportion of the propane to the total mass of the fluoroolefin and the propane in the hermetic compressor is less than 20% by mass in case that the temperature in the working condition is 115°C or lower.

In the refrigeration cycle system configured as described above, the proportion of the propane to the total mass of the fluoroolefin and the propane in the refrigerant mixture may be more than 20% by mass before the refrigerant mixture is included into the refrigeration cycle.

In the refrigeration cycle system configured as described above, the fluoroolefin may be at least one selected from the group consisting of 1, 1,2-trifluoroethylene, *trans-1,2-difluoroethylene,* cis-1,2-difluoroethylene, 1,1-difluoroethylene, tetrafluoroethylene, and monofluoroethylene.

In the refrigeration cycle system configured as described above, the refrigerant mixture may further contain difluoromethane.

In the refrigeration cycle system configured as described above, the refrigerant mixture may further contain a disproportionation inhibitor.

In the refrigeration cycle system configured as described above, the disproportionation inhibitor may be a saturated hydrocarbon with two to five carbon atoms or a haloalkane with one or two carbon atoms, the saturated hydrocarbon may be other than propane, and the haloalkane may be other than a fluoroalkane containing only fluorine as a halogen substituent.

In the refrigeration cycle system configured as described above, the hermetic compressor may include a rotary compression mechanism.

In the refrigeration cycle system configured as described above, the hermetic compressor may be inverter-driven.

Specifically, a refrigeration cycle system 10 according to Embodiment 2 is the refrigeration cycle system 10 as defined in Embodiment 1 or any one of Variants 1 to 4 and includes a hermetic compressor in which a refrigerating machine oil is retained (this hermetic compressor will be hereinafter referred to as the "compressor 30"). The refrigeration cycle system 10 according to Embodiment 2 uses a refrigerant mixture as a refrigerant, and the refrigerant mixture contains a fluoroolefin and propane. The refrigerating machine oil used in the compressor 30 is not limited to a particular type. A lubricating oil known in the field of compressors may be used as a base oil of the refrigerating machine oil, and the refrigerating machine oil may further contain a known additive as necessary.

The refrigerating machine oil used in the compressor 30 is not limited to a particular type. A lubricating oil known in the field of compressors may be used as a base oil of the refrigerating machine oil, and the refrigerating machine oil may further contain a known additive as necessary.

Examples of the lubricating oil used as the base oil of the refrigerating machine oil include, but are not limited to: hydrocarbon oils such as mineral oils, olefin polymers, naphthalene compounds, and alkylbenzenes; and oxygen-containing oils, including ester oils such as monoesters, diesters, polyol esters, and complex esters and ether oils such as polyalkylene glycols, polyvinyl ethers, polyphenyl ethers, and perfluoroethers. One of these base oils may be used alone, or two or more thereof may be used in any suitable combination.

The additive contained in the refrigerating machine oil is not limited to a particular type, and examples of the additive include an oiliness agent, a slidability improver, an extreme pressure additive, an antioxidant, an acid scavenger, a metal deactivator, an anti-foaming agent, a corrosion inhibitor, and a dispersant.

In the present embodiment, the base oil of the refrigerating machine oil preferably contains at least one selected from a polyol ester, a polyalkylene glycol, and a polyvinyl ether as a main component and more preferably contains a polyol ester or a polyvinyl ether as a main component. The term "main component" is intended to refer to a component the amount of which is 50% by mass or more based on the total amount (100% by mass) of the base oil in the refrigerating machine oil. The amount of the lubricating oil contained as the base oil in the refrigerating machine oil is not limited to a particular value and may be 80% by mass or more, 90% by mass or more, or 95% by mass or more based on the total amount (100% by mass) of the refrigerating machine oil.

### <Example of composition of refrigerant>

The refrigerant used in the refrigeration cycle system according to the present disclosure is a refrigerant mixture containing a fluoroolefin (fluoroalkene) and propane (R-290). The fluoroolefin is not limited to a particular type, and examples of the fluoroolefin include: fluoroethylenes such as 1,1,2-trifluoroethylene (HFO-1123), *trans-1,2-difluoroethylene* (HFO-1132(E)), cis-1,2-difluoroethylene (HFO-1132(Z)), 1,1-difluoroethylene (HFO-1132a), tetrafluoroethylene (FO-1114, TFE), and monofluoroethylene (HFO-1141); and fluoropropenes such as 1,2,3,3,3-pentafluoropropene (HFO-1225ye), 2,3,3,3-tetrafluoropropene (HFO-1234yf), 1,3,3,3-tetrafluoropropene (HFO-1234ze), 1,2,3,3-tetrafluoropropene (HFO-1234ye), and 3,3,3-trifluoropropene (HFO-1243zf).

One of these fluoroolefins may be used alone as a refrigerant, or any suitable combination of two or more of the fluoroolefins may be used as a refrigerant. Among the fluoroolefins, the fluoroethylenes are suitable for use as a refrigerant. Among the fluoroethylenes, 1,1,2-trifluoroethylene (HFO-1123) is particularly suitable for use.

The refrigerant mixture may further contain an "additional refrigerant" in addition to the fluoroolefin and propane. Typical examples of the additional refrigerant include, but are not limited to, a hydrofluorocarbon (HFC), a saturated hydrocarbon other than propane, and carbon dioxide.

Specific examples of the HFC include: fluoromethanes such as difluoromethane (R-32) and trifluoromethane (R-23); fluoroethanes such as fluoroethane (R-161), 1,1-difluoroethane (R-152a), 1,1,1-trifluoroethane (R-143a), 1,1,2,2-tetrafluoroethane (R-134), 1,1,1,2-tetrafluoroethane (R-134a), pentafluoroethane (R-125), difluoroethane, and trifluoroethane; fluoropropanes such as 1,1,1,3,3-pentafluoropropane (R-245fa), 1,1,1,2,3,3-hexafluoropropane (R-236ea), 1,1,1,3,3,3-hexafluoropropane (R-236fa), and 1,1,1,2,3,3,3-heptafluoropropane (R-227ea); fluorobutanes such as 1,1,1,3,3-pentafluorobutane (R-365mfc); and fluoropentanes such as 1,1,1,2,3,4,4,5,5,5-decafluoropentane (R-4310mee) and heptafluorocyclopentane (Re-447ef).

Specific examples of the saturated hydrocarbon include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

One of these additional refrigerants may be used alone, or any suitable combination of two or more of the additional refrigerants may be used as a refrigerant. Among the additional refrigerants, R-32 (difluoromethane) is typically suitable for use. As described later, some saturated hydrocarbons can be used as a disproportionation inhibitor. Thus, a saturated hydrocarbon can be used as both an additional refrigerant and a disproportionation inhibitor.

The refrigerant mixture may contain a disproportionation inhibitor for inhibiting disproportionation of the fluoroolefin. Specific examples of the disproportionation inhibitor include, but are not limited to, saturated hydrocarbons with two to five carbon atoms (other than propane) and haloalkanes with one to four carbon atoms other than haloalkanes all the halogen atoms of which are fluorine. For convenience of explanation, a saturated hydrocarbon used as a disproportionation inhibitor will be referred to as a "disproportionation-inhibiting alkane", and a haloalkane used as a disproportionation inhibitor will be referred to as a "disproportionation-inhibiting haloalkane".

As mentioned above, the disproportionation-inhibiting alkane used as a disproportionation inhibitor in the present disclosure may be a saturated hydrocarbon (alkane) with two to five carbon atoms, and specific examples of such a saturated hydrocarbon include ethane, cyclopropane, n-butane, cyclobutane, isobutane (2-methylpropane), methylcyclopropane, n-pentane, isopentane (2-methylbutane), neopentane (2,2-dimethylpropane), and methylcyclobutane. One of these saturated hydrocarbons may be used alone, or two or more thereof may be used in any suitable combination.

All of the above-mentioned saturated hydrocarbons are gaseous at normal temperature (n-pentane and methylcyclobutane have the highest boiling point which is about 36°C, and the other hydrocarbons have a boiling point lower than 36°C), and any of the saturated hydrocarbons can be suitably added as a component of the refrigerant mixture. Any saturated hydrocarbon with six or more carbon atoms is not preferred because such a saturated hydrocarbon is liquid at normal temperature and difficult to add as a component of the refrigerant mixture.

Propane, which is a saturated hydrocarbon with three carbon atoms, can inhibit disproportionation of fluoroolefins. However, as previously mentioned, propane is a main component of the refrigerant mixture in the present disclosure; thus, propane is not regarded as a "disproportionation-inhibiting alkane". Cyclopropane, which is a cyclic compound and different from linear propane (n-propane) used as a component of the refrigerant mixture, can be used as a disproportionation-inhibiting alkane.

A saturated hydrocarbon with one carbon atom, namely methane, is not preferred because it has a particularly high global warming potential (GWP). Among saturated hydrocarbons with two to five carbon atoms, cyclopentane has a boiling point of 49°C and is liquid at normal temperature; however, cyclopentane may be used as a disproportionation inhibitor in the present disclosure.

The disproportionation-inhibiting haloalkane used as a disproportionation inhibitor in the present disclosure may be any haloalkane with one to four carbon atoms other than haloalkanes all the halogen atoms of which are fluorine. Specific examples of the disproportionation-inhibiting haloalkane include halomethanes (halogenated methanes) which have one carbon atom, haloethanes (halogenated ethanes) which have two carbon atoms, halopropanes (halogenated propanes) which have three carbon atoms, and halobutanes (halogenated butanes) which have four carbon atoms.

The disproportionation-inhibiting haloalkane used may be one haloalkane selected from halomethanes, haloethanes, halopropanes, and halobutanes, or two or more haloalkanes selected from these disproportionation-inhibiting haloalkanes may be used in any suitable combination. The phrase "two or more haloalkanes selected" is intended to mean not only that two or more disproportionation-inhibiting haloalkanes differing in the number of carbon atoms may be selected (for example, a combination of a halomethane and a halomethane) but also that two or more disproportionation-inhibiting haloalkanes having the same number of carbon atoms and having different halogen substituents may be selected (for example, a combination of a first haloethane and a second haloethane different from the first haloethane). In the case of using a halobutane, the halobutane may have a linear structure or may have a branched structure (structure having the same carbon skeleton as isobutane or 2-methylpropane).

Specifically, the disproportionation-inhibiting haloalkane may have a structure represented by the following formula (1).

CₚH_{q}Xᵣ • • • (1)

In the formula (1), X is a halogen atom selected from the group consisting of fluorine (F), chlorine (Cl), bromine (Br), and iodine (I), p is an integer of 1 or 2, q is an integer of 0 or more, r is an integer of 1 or more, the sum of q and r is 2p + 2, and the halogen atoms X are the same or different when r is 2 or more.

Any haloalkane which is represented by the formula (1) but which contains only F as the halogen atom(s) X is excluded from candidates for the disproportionation-inhibiting haloalkane. This is because any disproportionation-inhibiting haloalkane which contains only F as the halogen atom(s) X is a compound usable as an additional refrigerant component and substantially fails to function as a disproportionation inhibitor.

In a disproportionation-inhibiting haloalkane represented by the formula (1), as described above, the halogen atom X may be at least one of F, Cl, Br, and I and is preferably at least I. When the number of carbon atoms is 2 (p = 2) and the number of halogen atoms is 2 or more (r ≥ 2), the halogen atoms X preferably include at least F and I.

When a disproportionation-inhibiting haloalkane represented by the formula (1) contains Cl and/or Br, the disproportionation-inhibiting haloalkane tends to have a high ozone depletion potential (ODP) and could be limited in availability or handleability. Regardless of what the halogen atom(s) X is (are), some disproportionation-inhibiting haloalkanes represented by the formula (1) are compounds having a relatively high ozone depletion potential (ODP) and/or a relatively high global warming potential (GWP).

In the present disclosure, a disproportionation-inhibiting haloalkane added to the refrigerant mixture can effectively inhibit disproportionation of the fluoroolefin or retard rapid progress of disproportionation of the fluoroolefin even when the amount of the added disproportionation-inhibiting haloalkane is relatively small. In addition, even when a disproportionation-inhibiting haloalkane is used in combination with another disproportionation inhibitor such as a disproportionation-inhibiting alkane, the total amount of the disproportionation inhibitors added to the refrigerant mixture is sufficiently small relative to the total amount of the refrigerant mixture. Thus, the use of a disproportionation-inhibiting haloalkane does not cause any significant impact on the environment even when the disproportionation-inhibiting haloalkane has a relatively high ODP or GWP.

Specific examples of disproportionation-inhibiting haloalkanes represented by the formula (1) include, but are not limited to: halomethanes such as (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I); and haloethanes such as 1,1,1-trifluoro-2-iodoethane (CF₃CH₂I), monoiodoethane (CH₃CH₂I), monobromoethane (CH₃CH₂Br), 1,1,1-triiodoethane (CH₃CI₃), and 1-bromo-2-iodo-tetrafluoroethane (CF₂BrCF₂I).

One of these disproportionation-inhibiting haloalkanes may be used alone, or two or more thereof may be used in any suitable combination. Among the disproportionation-inhibiting haloalkanes, at least one selected from the group consisting of diiodomethane (CH₂I₂), difluorodiiodomethane (CF₂I₂), trifluoroiodomethane (CF₃I), difluoroiodomethane (CHF₂I), 1-bromo-2-iodo-tetrafluoroethane (CF₂BrCF₂I), and 1,1,1-trifluoro-2-iodoethane (CF₃CH₂I) is particularly preferred in terms of factors such as availability, ODP value, and handleability.

In the present disclosure, as described above, the refrigerant mixture is composed of at least a fluoroolefin (fluoroalkene) and propane (R-290) and may further contain another refrigerant and/or a disproportionation inhibitor as necessary. In the refrigerant mixture, the amounts (contents) of the fluoroolefin and the propane are not limited to particular values, and the amount (content) of the disproportionation inhibitor is not limited to a particular value either.

For example, the amount of the fluoroolefin is 50% by mass or more and may be 60% by mass or more, 70% by mass or more, or 80% by mass or more based on 100% by mass of the total amount of the refrigerant mixture. The amount of the propane is less than 50% by mass and may be 40% by mass or less, 30% by mass or less, or 20% by mass or less based on 100% by mass of the total amount of the refrigerant mixture.

If the fluoroolefin accounts for less than 50% by mass of the total amount of the refrigerant mixture, the amount of the fluoroolefin in the refrigerant mixture is undesirably small, and the proportion of the propane increases. In this case, the propane, which is flammable, could be highly influential in the refrigerant mixture as a whole. Consequently, the refrigerant mixture fails to offer the advantage of achieving high handleability as well as a low GWP.

In the present embodiment, for example, the proportions of the fluoroolefin and the propane in a typical composition are such that the amount of the fluoroolefin is 80% by mass and the amount of the propane is 20% by mass based on the total amount (total mass of 100% by mass) of the fluoroolefin and the propane. For example, 1,1,2-trifluoroethylene (HFO-1123) is suitable for use as the fluoroolefin in this case, as shown in examples described later (Comparative Examples 1 and 2 and Example 1).

In order to further enhance the disproportionation-inhibiting effect, the proportion of the propane is 20% by mass or more based on the total mass of the fluoroolefin and the propane in the refrigerant mixture. For example, in the typical composition described above, the proportion of the propane to the fluoroolefin (HFO-1123) is 25% by mass; that is, the fluoroolefin: propane ratio is 80:20. The refrigerant mixture having this composition consists only of the fluoroolefin and the propane. In this case, the proportion of the propane to the total mass of the refrigerant mixture is 20% by mass (calculated as 20% by mass/(80% by mass + 20% by mass)) or more. This lower limit of the proportion of the propane applies also when the refrigerant mixture further contains a component other than the fluoroolefin and the propane.

When the refrigerant mixture contains a disproportionation inhibitor, the amount of the disproportionation inhibitor considered as a component of the refrigerant mixture is from 0.1 to 10% by mass based on the total amount (100% by mass) of the refrigerant mixture. If the amount of the disproportionation inhibitor is less than 0.1% by mass, the addition of the disproportionation inhibitor could, depending on the composition of the refrigerant mixture, fail to provide a satisfactory inhibiting effect on disproportionation of the fluoroolefin. If the amount of the disproportionation inhibitor is more than 10% by mass, the disproportionation-inhibiting effect achieved could be disproportionate to the amount of the disproportionation inhibitor added to (contained in) the refrigeration mixture.

As described above, the amount of the disproportionation inhibitor is up to 10% by mass. The amount of the disproportionation inhibitor may be 9.5% by mass or less, 9.0% by mass or less, 8.5% by mass or less, 5% by mass or less, or 3% by mass or less. The amount of the disproportionation inhibitor is at least 0.1% by mass as described above and may be 0.2% by mass or more, 0.5% by mass or more, 0.8% by mass or more, 1.0% by mass or more, or 1.2% by mass or more.

In general, most refrigerants for use in the refrigeration cycle system 10 contain impurities in an amount of 2 to 3% by mass or less. For example, commercially-available HFO-1123 with a purity of about 97% by mass is known, and this HFO-1123 contains residual synthesis materials or by-products as impurities in an amount of less than 3% by mass.

The disproportionation inhibitor added to the fluoroolefin can effectively inhibit or retard disproportionation of the fluoroolefin even when the amount of the added disproportionation inhibitor is at the level of impurity content (3% by mass or less). Thus, the amount of the disproportionation inhibitor to be added cannot be definitely specified. The above upper limit, lower limit, and other values of the amount of the disproportionation inhibitor in the refrigerant mixture are merely mentioned as typical preferred examples.

### <Refrigeration cycle working medium>

In the refrigeration cycle system 10 according to the present disclosure, a refrigeration cycle working medium is composed of the refrigerating machine oil retained in the compressor 30 and the refrigerant mixture described above. The refrigeration cycle working medium exhibits a refrigerant dissolved viscosity of 2 to 4 mm²/s under a working condition at a temperature of 28 to 60°C and an absolute pressure of 2.2 to 4.3 MPa. For convenience of explanation, this working condition will be referred to as the "working condition 1".

The temperature range and the pressure range in the working condition 1 are set in view of achieving a satisfactory COP (Coefficient of Performance) in the refrigeration cycle system 10.

Specifically, the upper limits of the temperature and pressure ranges are determined by physical property calculation using refrigerant thermophysical property database software named "Refprop 10" (NIST, National Institute of Standards and Technology). In the calculation, HFO-1123 is selected as a typical example of the fluoroolefin, and the refrigerant mixture (consisting of HFO-1123 and R-290) is assumed to have the above-described typical composition with a HFO-1123:R-290 ratio of 80:20 (mass ratio). The upper limits are calculated values (calculable limits) of the critical temperature and the critical pressure of the refrigerant mixture.

The lower limits of the temperature and pressure ranges are determined by using Refprop 10 mentioned above to theoretically calculate the condensation temperature and pressure in cooling and heating operations performed at an annual energy consumption efficiency. The annual energy consumption efficiency refers to an APF (Annual Performance Factor), which indicates the cooling and heating capacity per kW of power consumption that the refrigeration cycle system 10 exhibits when operated according to JIS C 9612 under the conditions as specified in JIS C 9612.

The refrigeration cycle working medium may exhibit a refrigerant dissolved viscosity of 2 to 4 mm²/s under a working condition at a temperature of 115°C or lower and an absolute pressure of 1.7 to 4.6 MPa. For convenience of explanation, this working condition will be referred to as the "working condition 2".

The upper temperature limit in the working condition 2 is set based on the insulation class of insulation paper used in the stator 60 which is a component of the electric motor 23 of the compressor 30.

The stator 60 includes insulation paper inserted between the coil 62 that generates a magnetic field upon receiving an electric current and a magnetic steel sheet. Insulation classes of insulation paper are specified in association with temperature in JIS C 4003 (see Table 1 "Thermal class and temperature" presented in "4. Thermal class" in JIS C 4003). For example, when the thermal class of insulation paper is class E, the maximum allowable temperature of the insulation paper is 120°C.

Considering factors such as temperature detection time lag or heat release between the refrigeration cycle working medium and the stator 60, a safety margin of 5 K can be set by way of example. When class E insulation paper is used, the upper temperature limit of the refrigeration cycle working medium is set to or below 115°C which corresponds to the insulation paper's maximum allowable temperature minus the safety margin of 5 K. Operating the compressor 30 at a temperature higher than the upper temperature limit could cause breakdown of insulation between the coil 62 and the magnetic steel sheet, and such insulation breakdown significantly increases the likelihood of electric discharge phenomenon.

The maximum allowable temperature of insulation paper varies for different thermal classes; for example, the maximum allowable temperature of class B insulation paper is 130°C, and the maximum allowable temperature of class F insulation paper is 155°C. Thus, the temperature threshold (i.e., the upper temperature limit in the working condition 2) depends on the selection of the thermal class of insulation paper.

The safety margin for the temperature of the working fluid is not limited to 5 K as the safety margin depends on the distance between a detector for detecting the temperature of the working medium and the stator or on the motor efficiency. The safety margin may be set to any value in the range of 0 to 20 K. It should be noted that the temperature of the refrigeration cycle working medium must not be above 150°C regardless of the selected thermal class because disproportionation of the fluoroolefin is likely to occur at such a high temperature.

The lower temperature limit in the working condition 2 may be set to 55°C. Thus, the temperature in the working condition 2 may range from 55 to 115°C.

The upper limit of the absolute pressure in the working condition 2 can be set based on the critical pressures of the fluoroolefin and the propane. Specifically, the critical pressure of HFO-1123, which is a typical example of the fluoroolefin, is 4.54 MPa, and the critical pressure of the propane is 4.25 MPa. Based on these critical pressures, the upper limit of the absolute pressure can be set to 4.6 MPa. The lower limit of the absolute pressure in the working condition 2 can be set to around 1.7 MPa which is an evaporating pressure in the cooling operation.

In the refrigeration cycle system 10 according to the present disclosure, the refrigerant dissolved viscosity of the refrigeration cycle working medium is in the range of 2 to 4 mm²/s as described above at least under the working condition 1 described above. The refrigerant dissolved viscosity of the refrigeration cycle working medium may be in the range of 2 to 4 mm²/s also under the working condition 2 described above.

The sliding portions of the compressor 30 of the refrigeration cycle system 10 are lubricated by the refrigerating machine oil. The refrigerants can naturally dissolve in the refrigerating machine oil. Thus, the refrigerant dissolved viscosity of the refrigerating machine oil varies depending on factors such as the temperature and pressure in the compressor 30. In general, the compatibility of the refrigerating machine oil with the refrigerants (solubility of the refrigerants in the refrigerating machine oil) differs depending on various factors such as the type and composition of the refrigerating machine oil (such as the type of a base oil, the mixing ratio between a plurality of base oils, and the type or amount of an additive). Thus, the refrigerant dissolved viscosity of the refrigeration cycle working medium can be adjusted (set) to a given range by suitably adjusting both the viscosity of the refrigerating machine oil used in the compressor 30 and the compatibility of the refrigerating machine oil with the refrigerants used in the refrigeration cycle.

The refrigerant dissolved viscosity of the refrigeration cycle working medium differs, for example, from a dissolved viscosity measured quasi-statically under strictly controlled conditions in an in-vitro environment. The refrigeration cycle working medium and the refrigerating machine oil contained in the hermetic enclosure 31 are vigorously stirred, and there are variations in the temperature and pressure in the hermetic enclosure 31. Thus, the measurement of the refrigerant dissolved viscosity of the refrigeration cycle working medium needs to take into account various factors such as time delay required for dissolution of the refrigeration cycle working medium in the refrigerating machine oil.

In the present disclosure, the refrigerant dissolved viscosity of the refrigeration cycle working medium is measured using a viscosity sensor while the compressor 30 is in operation. Specifically, for example, a viscosity sensor manufactured by Cambridge Viscosity, Inc. (product name: Miniature Viscometer SPC 501) is attached to a lower portion of the hermetic enclosure 31. The viscosity sensor is placed in such a way that the sensing part of the viscosity sensor is in contact with the refrigerating machine oil. Thus, the refrigerant dissolved viscosity during operation of the compressor 30 is measured on a real-time basis.

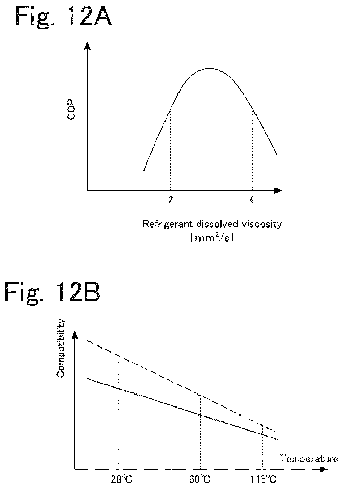

FIG 12A is a graph showing an example of the relationship between the refrigeration cycle working medium and the COP of the refrigeration cycle system 10 in the case where HFO-1123 is selected as the fluoroolefin, the refrigerant mixture used has the typical composition described above (HFO-1123:R-290 = 80:20 (mass ratio)), and a polyol ester is used as the refrigerating machine oil.

As shown in FIG 12A, if the refrigerant dissolved viscosity of the refrigeration cycle working medium is less than 2 mm²/s under the working condition 1 described above, satisfactory sliding performance cannot be achieved at the sliding portions of the compressor 30, and this results in reduced air-conditioning performance and a failure to achieve a satisfactory COP. If the refrigerant dissolved viscosity of the refrigeration cycle working medium is more than 4 mm²/s under the working condition 1 described above, the resistance occurring during stirring of the refrigeration cycle working medium or at start-up of the compressor 30 increases, and accordingly the energy consumption of the refrigeration cycle increases and at the same time the air-conditioning performance declines, with the result that a satisfactory COP cannot be achieved.

In contrast, when the refrigerant dissolved viscosity of the refrigeration cycle working medium is in the range of 2 to 4 mm²/s under the working condition 1 described above, satisfactory sliding performance can be achieved at the sliding portions of the compressor 30, and the increase in resistance during operation of the compressor 30 can be reduced. Thus, the refrigeration cycle can achieve both reduced energy consumption and satisfactory refrigeration capacity (satisfactory air-conditioning performance). As a result, the refrigeration cycle system 10 using a fluoroolefin as a refrigerant can achieve a satisfactory COP and successfully inhibit disproportionation of the fluoroolefin.

Additionally, in the present disclosure where the refrigerant mixture contains a fluoroolefin and propane, the propane contained in the refrigerant mixture easily dissolves in the refrigerating machine oil when the refrigerant dissolved viscosity of the refrigeration cycle working medium is in the range specified above. This is because, as clearly seen from the above-mentioned typical examples of the base oil, the main component of the refrigerating machine oil has a molecular structure having a hydrocarbon skeleton.

Specifically, the molecular structure of the refrigerating machine oil is similar to the molecular structure of R-290 (n-propane) which is a hydrocarbon, while the molecular structure of a fluorine-atom containing refrigerant such as the fluoroolefin is not so similar to the molecular structure of the refrigerating machine oil. Thus, R-290 is more soluble in the refrigerating machine oil than the fluoroolefin.

An oxygen-containing oil such as a polyol ester or polyvinyl ether may be used as a base oil of the refrigerating machine oil. Such an oxygen-containing oil has a high polarity. This is because a molecule has a high polarity when the dipole moment of the molecule, which is the vector sum of bond moments of the bonds in the molecule, is high.

In conventional refrigeration cycles, for example, HFCs such as R-32 (difluoromethane) are used as refrigerants. Fluoroolefins such as HFO-1123 have a higher dipole moment than HFCs. Thus, fluoroolefins are more soluble in the refrigerating machine oil than HFCs.

For example, a conventional refrigeration cycle as taught in Japanese Laid-Open Patent Application Publication No. 2017-141974 is configured on the assumption of using an HFC refrigerant such as R-32 or a refrigerant mixture containing R-32 (e.g., R-410A which is a refrigerant mixture of R-32 and R-125 (pentafluoroethane)). Thus, when the refrigerant mixture is used in such a conventional refrigeration cycle, there is no need to take into account the solubility of the different refrigerants in the refrigerating machine oil.

In contrast, the present disclosure is based on the assumption that a fluoroolefin is used as a main component of a refrigerant mixture and that propane is used as an auxiliary component of the refrigerant mixture to enhance the practical utility of the fluoroolefin as a refrigerant. The fluoroolefin and the propane differ in the solubility in the refrigerating machine oil, and the propane acts to inhibit disproportionation of the fluoroolefin. An investigation conducted on the refrigeration cycle working medium taking into account the difference in solubility has led to the unique finding that the refrigerant dissolved viscosity should be adjusted to the range of 2 to 4 mm²/s at least under the working condition 1 described above.

In particular, since HFCs are less soluble in the refrigerating machine oil than fluoroolefins, a refrigerant dissolved viscosity suitable for a conventional refrigeration cycle working medium cannot apply to a refrigerant mixture whose main component is a fluoroolefin. As previously described, fluoroolefins are prone to disproportionation, and the use of a fluoroolefin necessitates considering how to successfully inhibit disproportionation of the fluoroolefin. In view of these circumstances, the present disclosure has uniquely found the working condition 1 described above, the working condition 2 described above, and the refrigerant dissolved viscosity range suitable for these working conditions.

According to the present disclosure, when the compressor 30 is not in operation, the amount of the fluoroolefin contained in the refrigerant mixture present in the hermetic enclosure 31 is apparently large since the propane contained in the refrigerant mixture easily dissolves in the refrigerating machine oil. When the compressor 30 is in operation, the propane dissolved in the refrigerating machine oil is liberated from the refrigerating machine oil as the temperature increases.

Thus, the propane, which is more combustible than the other refrigerant(s) contained in the refrigerant mixture, easily dissolves in the refrigerating machine oil when the compressor 30 is not in operation. This means that the apparent amount of the propane in the refrigerant mixture decreases. Hence, even in the event of leakage of the refrigerant mixture, the risk of burning of the leaking refrigerant mixture can be successfully reduced.

When the compressor 30 is in operation, the propane is liberated from the refrigerating machine oil, and the apparent amount of the propane in the refrigerant mixture increases. Thus, disproportionation of the fluoroolefin can be successfully inhibited by the propane which has a disproportionation-inhibiting action on the fluoroolefin.

Furthermore, in the present disclosure, the compatibility of the refrigerant mixture with the refrigerating machine oil may be adjusted, especially based on the working condition 2, to optimize the apparent component ratio of the refrigerant mixture in the compressor 30 (i.e., in the hermetic enclosure 31).

Specifically, the compatibility of the refrigerant mixture with the refrigerating machine oil may be adjusted such that the proportion of the propane to the total mass of the fluoroolefin and the propane in the compressor 30 (in the hermetic enclosure 31) is 20% by mass or more in case that the temperature in the above-described working condition 2 is higher than 115°C. For convenience of explanation, this condition will be referred to as the "compatibility adjustment condition 1".

The compatibility of the refrigerant mixture with the refrigerating machine oil may be adjusted such that the proportion of the propane to the total mass of the fluoroolefin and the propane in the compressor 30 (in the hermetic enclosure 31) is less than 20% by mass in case that the temperature in the above-described working condition 2 is 115°C or lower (preferably from 55 to 115°C). For convenience of explanation, this condition will be referred to as the "compatibility adjustment condition 2".

For either the compatibility adjustment condition 1 or compatibility adjustment condition 2, the composition of the refrigerant mixture may be such that the proportion of the propane to the total mass of the fluoroolefin and the propane is more than 20% by mass before the refrigerant mixture is included into the refrigeration cycle. The inclusion of the refrigerant mixture into the refrigeration cycle leads to a part of the refrigerant mixture being in contact with the refrigerating machine oil. As previously described, the propane is easily soluble in the refrigerating machine oil. Thus, when the compressor 30 is not in operation, that is, when the refrigeration cycle is not working, the propane dissolves in the refrigerating machine oil over time. Thus, the amount of the propane is adjusted to be above the specified lower limit before inclusion of the refrigerant mixture into the refrigeration cycle.

The compatibility adjustment condition 1 or compatibility adjustment condition 2 will be described with reference to FIG 12B. FIG 12B is a graph showing the relationship between the compatibility with the refrigerating machine oil and the temperature for each of the fluoroolefin and the propane of which the refrigerant mixture is composed. FIG 12B shows the compatibility of HFO-1123 which is a typical example of the fluoroolefin. The solid line represents the compatibility of HFO-1123, and the dashed line represents the compatibility of R-290.

As previously described, R-290 has higher compatibility with the refrigerating machine oil than HFO-1123. Thus, as shown in FIG 12B, the solid line representing the compatibility of HFO-1123 is located below the dashed line representing the compatibility of R-290.

The compatibility decreases with increasing temperature. Thus, the refrigerants dissolved in the refrigerating machine oil are released from the refrigerating machine oil as the temperature increases. This means that the amount of the refrigerants circulating in the refrigeration cycle increases as the temperature increases. As stated above, R-290 has higher compatibility than HFO-1123; thus, an increase in temperature entails an increase in the proportion of R-290 in the refrigerant mixture circulating in the refrigeration cycle.

In the present disclosure, the compatibility with the refrigerating machine oil is adjusted such that the proportion of R-290 to the total mass of HFO-1123 and R-290 in the refrigerant mixture circulating in the refrigeration cycle is at least 20% by mass in case that the temperature of the refrigeration cycle working medium reaches 115°C. This adjustment is made taking into account the difference as shown in FIG 12B between the compatibility-versus-temperature relationships of the refrigerants. As a result of such compatibility adjustment, the concentration (proportion) of R-290 in the refrigerant mixture becomes high when the temperature of the refrigeration cycle working medium is 115°C or higher, that is, when the compatibility adjustment condition 1 is satisfied. This can ensure satisfactory inhibition of disproportionation of the fluoroolefin.

Furthermore, in the operation temperature range including the temperature range of the working condition 1, i.e., under the compatibility adjustment condition 2, the proportion of R-290 in the refrigerant mixture is at most less than 20% by mass. In this case, even if the refrigerant mixture leaks out of the compressor 30, the combustibility of the leaking refrigerant mixture can be successfully reduced thanks to the lowered concentration (proportion) of R-290, and the risk of burning of the refrigerant mixture can be reduced.

### Examples

The present disclosure will be described more specifically based on an example and comparative examples. The present disclosure is not limited to the example described below. Those skilled in the art can make various changes, modifications, or alterations without departing from the scope of the present disclosure.

### (Experimental system for disproportionation)

A hermetic pressure-resistant vessel (hermetic stainless steel vessel TVS-N2 (trade name) manufactured by Taiatsu Garasu Kogyo, Co. Ltd., internal volume = 50 mL) was fitted with a pressure sensor (VESVM 10-2m (trade name) manufactured by Valcom Co., Ltd.) for measuring the internal pressure of the pressure-resistant vessel, a thermocouple (PL thermocouple gland PL-18-K-A 4-T (trade name) manufactured by Conax Technologies) for measuring the internal temperature of the pressure-resistant vessel, and an electric discharge device for effecting electric discharge in the pressure-resistant vessel.

A gas cylinder holding a fluoroolefin, in particular 1,1,2-trifluoroethylene (HFO-1123 manufactured by SynQuest Laboratories, Inc. and sold by Hydrus Chemical Inc.; this HFO-1123 contains 5% limonene (liquid phase) as a stabilizer), was connected to the pressure-resistant vessel in such a way as to enable pressure adjustment. Two mantle heaters (pipe-shaped mantle heaters P-31 and P-51 (trade names) manufactured by Tokyo Garasu Kikai Co., Ltd.) were placed to heat the entire pressure-resistant vessel, and a ribbon heater (flexible ribbon heater manufactured by Tokyo Technological Labo Co., Ltd., 1 m, 200 W) was placed to heat the piping. In this manner, an experimental system for disproportionation was constructed.

### (Comparative Example 1)

In the experimental system, the HFO-1123 was introduced from the gas cylinder into the pressure-resistant vessel, and propane (R-290) was added in an amount of 10% by mass of the total mass of the refrigerant mixture (that is, the HFO-1123:R-290 mass ratio was 90:10). The refrigerant mixture has combustibility of class A2 and has a GWP of less than 10.

To induce disproportionation of the HFO-1123, the electric discharge device was operated to effect 300-V discharge once at an internal temperature of about 27°C (300 K). As a result, the occurrence of disproportionation was observed.

### (Comparative Example 2)

In the experimental system, the HFO-1123 was introduced from the gas cylinder into the pressure-resistant vessel, and propane was added in an amount of 15% by mass of the total mass of the refrigerant mixture (that is, the HFO-1123:R-290 mass ratio was 85:15). The refrigerant mixture has combustibility of class A2 and has a GWP of less than 10.

To induce disproportionation of the HFO-1123, the electric discharge device was operated to effect 300-V discharge five times at an internal temperature of about 27°C (300 K). As a result, the occurrence of disproportionation was observed.

### (Example 1)

In the experimental system, the HFO-1123 was introduced from the gas cylinder into the pressure-resistant vessel, and propane was added in an amount of 20% by mass of the total mass of the refrigerant mixture (that is, the HFO-1123:R-290 mass ratio was 80:20). The refrigerant mixture has combustibility of class A3 and has a GWP of less than 10.

To induce disproportionation of the HFO-1123, the electric discharge device was operated to effect 300-V discharge a plurality of times at an internal temperature of about 27°C (300 K). However, the occurrence of disproportionation was not observed.

All of the embodiments described above may be combined together unless they contradict each other. From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The compressor for a refrigeration cycle system according to the present disclosure can be used as a compressor adapted to inhibit disproportionation of a working medium containing an ethylenic fluoroolefin in a refrigeration cycle system.

### Reference Signs List

- 10:: refrigeration cycle system
- 30:: compressor
- 31:: hermetic enclosure
- 36:: power supply terminal
- 40:: compression unit
- 50:: electric unit
- 51:: rotor
- 54a:: protrusion
- 55:: through hole (path for working medium)
- 60:: stator
- 61:: stator core (core)
- 62:: coil
- 65:: lead wire
- 66:: first coil end (coil end)
- 67:: second coil end (coil end)
- 68:: recess (path for working medium)
- 70:: feeder

## Claims

1. A compressor for a refrigeration cycle system, the compressor comprising:
a compression unit that compresses a working medium containing an ethylenic fluoroolefin as a refrigerant and a refrigerating machine oil;
an electric unit that drives the compression unit, the electric unit including a stator and a rotor rotatable on an axis;
a hermetic enclosure housing the working medium, the compression unit, and the electric unit, the hermetic enclosure including a power supply terminal electrically connectable to an external power source; and
a lead wire connected to the power supply terminal and the stator, wherein
the stator includes
a core, and
a coil connected to the lead wire and wound on the core, and
the lead wire has a higher dielectric strength than the coil.

2. The compressor according to claim 1, wherein
the coil of the stator is wound by concentrated winding or distributed winding.

3. The compressor according to claim 1, wherein
the rotor includes a protrusion on at least one of two ends of the rotor that are opposite to each other in a direction along the axis.

4. The compressor according to claim 1, wherein
at least the stator or the rotor includes a path for the working medium, the path extending between two ends of the stator or the rotor that are opposite to each other in a direction along the axis.

5. The compressor according to claim 1, further comprising a feeder that holds a disproportionation inhibitor for inhibiting disproportionation of the ethylenic fluoroolefin and that releases the disproportionation inhibitor at a temperature equal to or higher than a specific temperature, wherein
the coil includes a coil end projecting from an end of the core in a direction along the axis, and
the feeder is located closer to the coil end than to the core.

6. The compressor according to claim 1, wherein
the ethylenic fluoroolefin contained in the working medium can undergo disproportionation.

7. The compressor according to claim 1, wherein
the ethylenic fluoroolefin is at least one selected from the group consisting of 1,1,2-trifluoroethylene, *trans-1,2-difluoroethylene,* cis-1,2-difluoroethylene, 1,1-difluoroethylene, tetrafluoroethylene, and monofluoroethylene.

8. The compressor according to claim 1, wherein
the working medium further contains difluoromethane as a refrigerant.

9. The compressor according to claim 1, wherein
the working medium further contains a saturated hydrocarbon with two to five carbon atoms.

10. The compressor according to claim 9, wherein
the saturated hydrocarbon comprises n-propane.

11. The compressor according to claim 1, wherein
the working medium further contains a haloalkane with one or two carbon atoms as a disproportionation inhibitor for inhibiting disproportionation of the ethylenic fluoroolefin, and
the haloalkane is other than a fluoroalkane containing only fluorine as a halogen substituent.

12. The compressor according to claim 1, wherein
the working medium contains 1,1,2-trifluoroethylene and n-propane, and
a proportion of the n-propane to a total amount of the 1,1,2-trifluoroethylene and the n-propane is 20% by mass or more.

13. The compressor according to claim 1, wherein
the working medium contains 1,1,2-trifluoroethylene and n-propane, and
a proportion of the 1,1,2-trifluoroethylene is 80% and a proportion of the n-propane is 20% by mass based on 100% by mass of a total amount of the 1,1,2-trifluoroethylene and the n-propane.
